# EUROPEAN PATENT SPECIFICATION

(11) **EP 3 519 205 B1**
(45) Date of publication and mention of the grant of the patent: **17.03.2021**
(21) Application number: 16801880.2
(22) Date of filing: 30.09.2016
(51) Int. Cl.: B60C 9/00

(54) **CARBON FIBER COMPOSITE STRIPS AS BELT IN PNEUMATIC RADIAL TIRES**
KOHLENSTOFFFASERVERBUNDSTREIFEN ALS BAND BEI RADIALLUFTREIFEN
BANDES COMPOSITES DE FIBRES DE CARBONE UTILISÉES EN TANT QUE CEINTURE DANS DES PNEUS RADIAUX

(43) Date of publication of application: 07.08.2019
(73) Proprietor: Kordsa Teknik Tekstil Anonim Sirketi, Kocaeli (TR)
(72) Inventor: KORKMAZ, Deniz, Izmit/Kocaeli (TR); FIDAN, Mehmet Sadettin, Izmit/Kocaeli (TR); BILGE, Egemen, Izmit/Kocaeli (TR)
(74) Representative: Dericioglu, E. Korhan
(86) International application number: PCT/TR2016/050360
(87) International publication number: WO 2018/063109

(56) References cited:
- EP-A1- 0 237 599
- EP-A1- 2 765 333
- EP-A2- 1 108 740

## Description

### Field of the invention

This invention relates to a tire which is provided with flight weight cross belt layers. In particular, the present invention relates to a tire which is provided with light weight composite carbon fiber belt strips, said belt contributing in decreasing the overall tire weight and improving high speed durability.

### Background of the invention

The pneumatic radial tires with cross-ply belt layers made of steel cords have excellent steering stability and wear resistance due to its high belt package rigidity. But on the other hand, such tires have four major drawbacks. First, the heavy belt package made of steel cords increases the tire weight which leads to increased rolling resistance and fuel consumption. The second drawback, under high speed conditions, the centrifugal forces generated by heavy steel cord belt package increase the pantographic movements of belt edge cords which increases the potential risk of belt edge separation. The third drawback, the cut ends of steel cord filaments at belt edges, are without brass coating and no chemical bonding with rubber matrix which tend to initiate crack initiations at cut-ends. The fourth drawback, the steel cords are not corrosion resistant in case of contact with moisture.

According to US 5,246,051 a pneumatic radial tire comprises a belt comprised of plural belt layers, in which at least one belt layer is formed by arranging particular twisted cords, which are obtained by twisting particular filament-resin composite bodies, at a particular end count. In this tire, the weight is light, the rolling resistance and steering stability as well as the resistances to bending of belt cord in the running on bad road are considerably excellent. In those applications, the belt reinforcement elements are twisted strands or cords.

According to US 5,291,930 a pneumatic radial tire including one or more belt layers, wherein cords are used as reinforcing element in at least one belt layer. These cords are formed by impregnating and attaching a resin having a modulus in tension of not more than 150 kg/mm² to bundles of cord-like Aramid fibers composed of a number of filaments having a tensile strength of not less than 15 g/d and finess of 1-15 deniers, an impregnated and attached amount of the filaments being in a range of 30% to 70 wt % relative to a weight of the filaments, and each of the cords has an elliptical or rectangular cross-section shape having an aspect ratio of a major axis(b)/a minor axis(a) being 1.5 to 5. Each of the bundles of the fibers are not twisted.

According to US 5,323,829 a pneumatic tire with carbon fiber cord reinforcement wherein the carbon fiber cords have a round cross-sectional shape and twist per inch(TPI) of 1.2 to 1.6 turns per inch(TPI) is provided. Preferably, the carbon fiber cords are coated with an RFL or epoxy/RFL adhesive. It is also preferred that carbon fiber cords having an S twist and carbon fiber cords having a Z twist be used in the same reinforcing plies in the tire. Especially preferred is the incorporation of carbon fiber cords in a folded belt.

According to US 6,361,860 the composites of high melting point thermoplastics such as polyphenylene sulfide or polyimide and high modulus fibers such as carbon, graphite, or boron can be bonded to rubber using a primer such as a metal primer. The composite desirably has a modulus of elasticity of at least 750,000 psi and can be used as belt in non-flat tire.

EP0237599, EP1108740, and EP2765333 are also known from the prior art.

### Summary of the invention

The objective of the invention is to provide a pneumatic radial tire with reduced weight, low rolling resistance and sufficient steering stability and high speed durability by using composite strips (tapes) made of carbon fiber as reinforcement and thermoplastic aliphatic polyamide resins as matrix in cross-ply belt layers with cut-ends.

The further objective of the invention is to enhance the compressibility of the carbon fiber/resin composite strips with crimped strip construction, and to prevent compression induced strip breakages

At least one of the objectives is solved by a pneumatic radial tire according to claim 1.

### Definitions:

**Belt:** A rubber coated steel or fabric layer that runs circumferentially around a tire between the tread and the plies and is usually oriented at opposite angle to another belt.
**Belt angle** : Angle between belt strips and equatorial plane.
**Crimp** : Waviness of the strip.
**Crimp frequency:** Number of crimp per 1000 mm(1000mm/crimp length).
**Crimp height** (ampliture) : The height of the displacement of the strip from its uncrimped condition.
**Equatorial plane (EP)** : Plane passing through the circumferential center line in a tire.
**Spacing(s)** : Distance between composite strips within the same belt layer.
**Thermoplastic resin** : Resin that softens when heated and hardens again when cooled.

### Brief description of the drawings

Figure-1 is a cross-sectional view of a carbon fiber/resin composite strip, wherein
   1 is composite strip
   2 is resin matrix
   3 is carbon fiber
Figure-2 is a cross-sectional view of a carbon fiber/resin composite strip, wherein
   h is the thickness of the composite strip
   w is the width of the composite strip
Figure-3 shows the carbon fiber/resin composite strips in belt ply, wherein,
   1 is composite strip
   s is spacing(rivet area) between the composite strips
Figure-4a is the cross-sectional view of two-layer belt made of carbon fiber/resin composite strips wherein,
   L1 is the width of the first belt layer 5
   L2 is the width of the second belt layer 6, and the widths L1 and L2 are equal to each other
Figure-4b is the cross-sectional view of two-layer belt made of carbon fiber/resin composite strips wherein,
   5 is first belt layer
   6 is second belt layer
   L1 is the width of the first belt layer 5,
   L2 is the width of the second belt layer 6, and L1 > L2
Figure-5a shows the view of the crimped carbon fiber/resin composite strip in xz plane and 5b shows the crimped carbon fiber/resin composite strip in xy plane.
   8 is the lateral view of the crimped carbon fiber/resin composite strip
   9 is the top view of the crimped carbon fiber/resin composite strip
   10 is the three dimensional view of the crimped carbon fiber/resin composite strip
   x is longitudinal axis of the composite strip
   y is lateral(transverse) axis of the composite strip
   z is vertical axis to the xy plane
   xy is horizontal plane in which the flat composite strips are placed on the belt package
   xz is vertical plane to belt package surface
Figure-6 is a lateral view of the crimp, wherein,
   x is the crimp length
   y is the crimp height
Figure-7 is a cross-ply belt made of carbon fiber/resin composite strips with 90° cut ends
   wherein,
   EP is equatorial plane
   Φ is belt angle
Figure-8 is a cross-ply belt made of carbon fiber/resin composite strips with narrow angle cut ends wherein,
   EP is equatorial plane
   Φ is belt angle

### Detailed description of the invention

The weight and rolling resistance of a pneumatic radial tire can be reduced by replacing (partially or totally) heavy belt layers made of steel cords with ultra high modulus textile reinforcements like aramid and carbon fibers.

In case of carbon fibers having much higher modulus than that of aramid, it has a drawback of high strength and modulus loss after twisting which is necessary for compressibility without breaking. On the other hand, the composite uniaxial (untwisted) carbon fiber strips in thermoplastic or thermosetting resin matrix are subjected to the buckling when exposed to the compressive forces in footprint, which leads to breakages.

In a preferable embodiment of the present invention, volumetric carbon fiber content of the composite strip is higher than 40% and less than 70%. The carbon fiber content of less than 40% is not effective to provide sufficient tensile stiffness, and higher than 70% is not suitable for belt package durability under high speed conditions (Figure-1).

In a preferable embodiment of the present invention, the thickness of the carbon fiber/resin composite strip higher than 0.5 mm and less than 1.5 mm. If strip thickness less than 0.5 mm, the strength and tensile stiffness is not sufficient and puncture resistance is very low. In case higher thickness than 1.5 mm, rubber gauge will be too high to reduce rolling resistance.

In a preferable embodiment of the invention, the width of the carbon fiber/thermoplastic resin composite strip is higher than 2.0 mm and less than 10 mm. Preferably, higher than 3.0 mm and less than 6.0 mm. If the strip width is less than 2.0 mm, the lateral bending stiffness (in-plane bending stiffness) will not be high enough. In case of higher strip width than 10 mm, the lateral stability will be too low depending on the aspect ratio of the strip cross-section (Figure-2).

In a preferable embodiment of the invention, the each spacing (S) between the composite strips is minimum 2 maximum 5 mm. This spacing range provides sufficient rubber penetration for dynamic durability and stiffness of belt package rigidity (Figure-3).

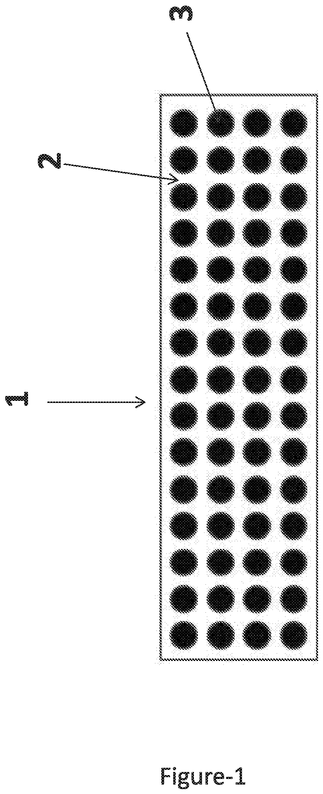

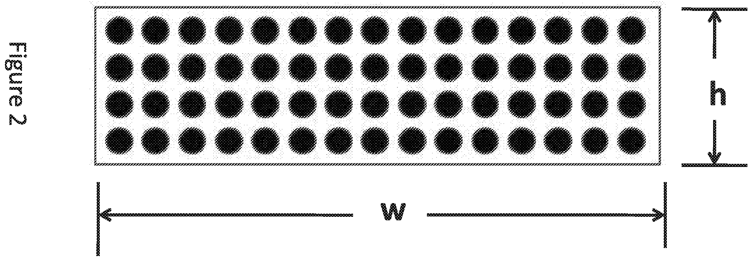

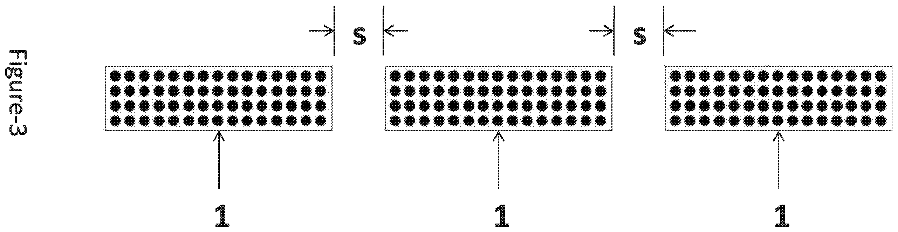

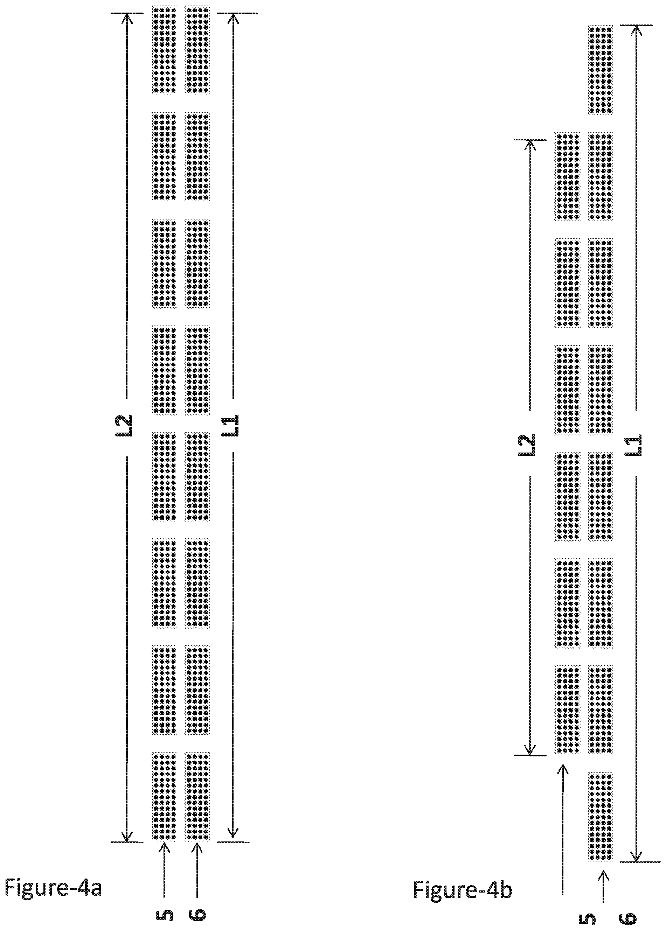

In a preferable embodiment of the invention, the first layer L1 is equal to the second layer L2, or the first layer L1 is longer than the second layer L2 (Figures 4a and 4b).

In a preferable embodiment of the invention, the reinforcement strips comprising untwisted (uniaxial) carbon fibers in thermoplastic resins matrix like nylon 6.6 have been crimped (wavy structure) to enable them to absorb the compressive forces in axial direction (in xz plane), and used as cross-ply belt reinforcement in pneumatic radial tires (Figure-5).

In a preferable embodiment of the invention, the crimp frequency is minimum 20 and maximum 60 crimp/meter. The lower frequency than 20 does not provide the needed compressibility, and the higher frequency than 60 decreases tensile modulus of the strip in axial direction (x).

According to the invention, the crimps of the composite strips are in horizontal plane (xy plane) in lateral direction or in vertical (xz) plane in longitudinal direction.

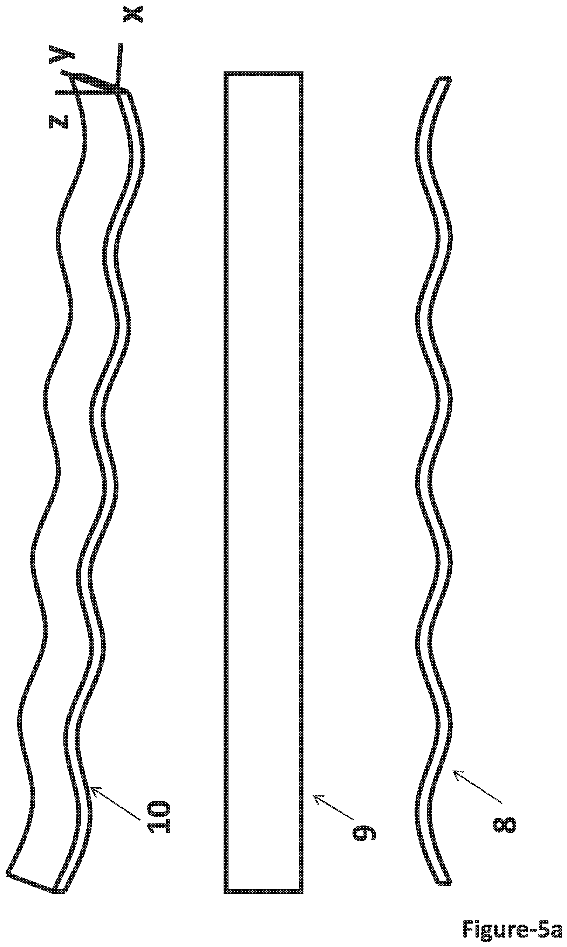

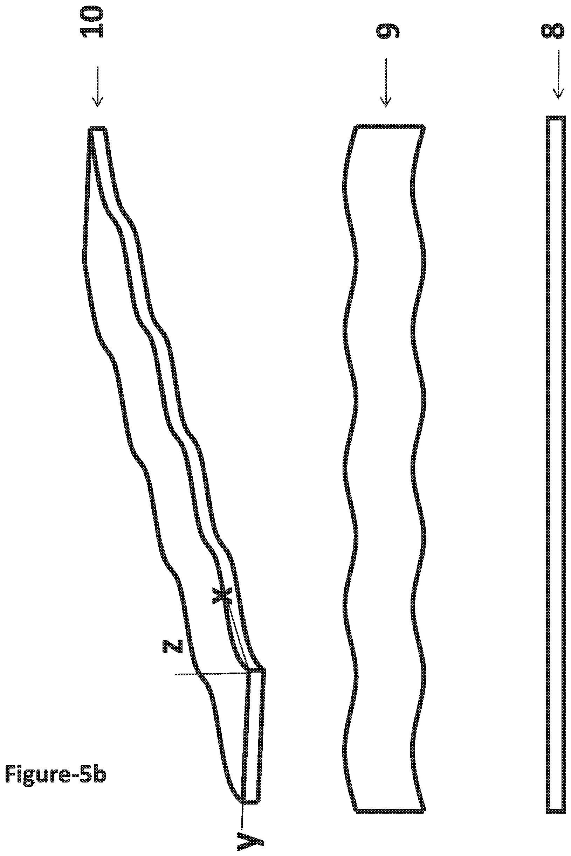

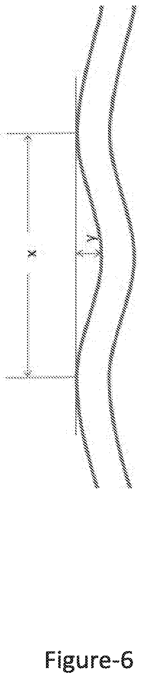

In a preferable embodiment of the invention the crimp height is minimum 0.3 and maximum 1.0 mm. The crimp height less than 0.3 mm is not effective in providing axial compressibility, and crimp height higher than 1.0 mm gives too thick strip (Figures 5 and 6).

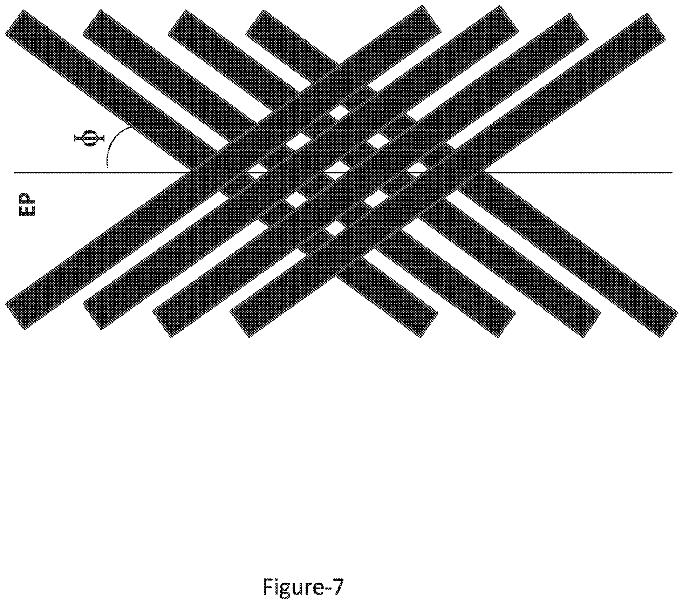

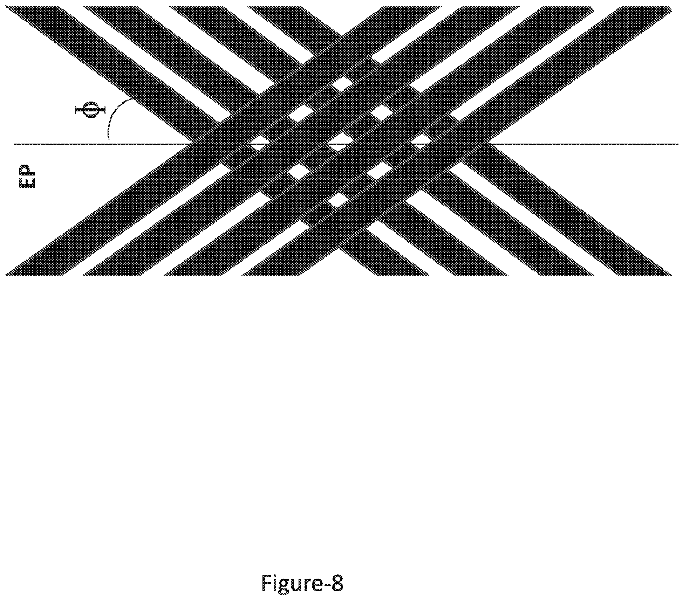

In a preferable embodiment of the invention, the angle of the cross-ply belt strips to equatorial plane is minimum 15° and maximum 25°. In case of the lower angles than 15°, the lateral (transverse) in-plane stiffness becomes too low, and if the angle is higher than 25°, the tensile stiffness in circumferential direction becomes too low (Figures 7 and 8). According to the invention cut-ends of the strips in belt have 90° cut angle (Figure-7).

In a preferable embodiment of the invention cut-ends of the strips in belt have the same cut angle as belt angle (Figure-8).

In a preferable embodiment of the invention, the resin matrix in composite strips is a thermoplastic resin which has a melting point temperature between 200 °C and 300°C.

In a preferable embodiment of the present invention, the thermoplastic resin in composite strips is nylon 6,6.

## Claims

1. A pneumatic radial tire comprising a carcass layer and a cross-ply belt package with cut-ends which is disposed over the said carcass layer, said cross-ply belt package having at least two layers (5, 6), comprising composite strips (1) as reinforcement elements which is **characterized in that**, the said strips are made of uniaxial carbon fibers (3) in a resin matrix (2) and crimps of the said strips are in longitudinal direction in xz plane or in lateral direction in xy plane, wherein x is the longitudinal axis of the composite strip, y is the lateral axis of the composite strip and z perpendicular to the xy plane.

2. The pneumatic radial tire comprising a carcass layer and a cross-ply belt package with cut-ends which is disposed over the said carcass layer according to claim 1, the volume content of said carbon fibers (3) in said composite strips (1) is between 40% and 70%.

3. The pneumatic radial tire comprising a carcass layer and a cross-ply belt package with cut-ends which is disposed over the said carcass layer according to claim 1, the thickness of the said composite strips (1) is higher than 0.5 mm and less than 1.5 mm.

4. The pneumatic radial tire comprising a carcass layer and a cross-ply belt package with cut-ends which is disposed over the said carcass layer according to claim 1, the width of the said composite strips (1) is higher than 2.0 mm and less than 10 mm.

5. The pneumatic radial tire comprising a carcass layer and a cross-ply belt package with cut-ends which is disposed over the said carcass layer according to claim 1, the width of the said composite strips (1) is higher than 3.0 mm and less than 6.0 mm.

6. The pneumatic radial tire comprising a carcass layer and a cross-ply belt package with cut-ends which is disposed over the said carcass layer according to claim 1, the width of the first belt layer L1 (5) of the cross-ply belt package is equal to the width of the second belt layer L2 (6).

7. The pneumatic radial tire comprising a carcass layer and a cross-ply belt package with cut-ends which is disposed over the said carcass layer according to claim 1, the width of the first belt layer L1 (5) of the cross-ply belt package is greater than the width of the second belt layer L2 (6).

8. The pneumatic radial tire comprising a carcass layer and a cross-ply belt package with cut-ends which is disposed over the said carcass layer according to claim 1, the crimp frequency of the said composite strips (1) is at least 20 crimp/meter and maximum 60 crimp/meter.

9. The pneumatic radial tire comprising a carcass layer and a cross-ply belt package with cut-ends which is disposed over the said carcass layer according to claim 1, the crimp height of the said composite strips (1) is at least 0.3 mm and maximum 1.0 mm.

10. The pneumatic radial tire comprising a carcass layer and a cross-ply belt package with cut-ends which is disposed over the said carcass layer according to claim 1, the belt angle of the said composite strips (1) to the equatorial plane is 15 to 25° having cut-ends with 90° cut angle.

11. The pneumatic radial tire comprising a carcass layer and a cross-ply belt package with cut-ends which is disposed over the said carcass layer according to claim 1, the belt angle of the said composite strips (1) to the equatorial plane is 15 to 25° having cut-ends with the same angle as belt angle.

12. The pneumatic radial tire comprising a carcass layer and a cross-ply belt package with cut-ends which is disposed over the said carcass layer according to claim 1, the melting point temperature of the said resins (2) in said composite strips (1) is minimum 200 °C and maximum 300°C.

13. The pneumatic radial tire comprising a carcass layer and a cross-ply belt package with cut-ends which is disposed over the said carcass layer according to claim 1, the said resin (2) in said composite strips (2) is a thermoplastic resin.

14. The pneumatic radial tire comprising a carcass layer and a cross-ply belt package with cut-ends which is disposed over the said carcass layer according to claim 1, the said resin (2) in said composite strips (2) is nylon 6,6.

## Patentansprüche

1. Pneumatischer Radialreifen, umfassend eine Karkassenschicht und ein Kreuzlagen-Gürtelpaket mit geschnittenen Enden, das über der Karkassenschicht angeordnet ist, wobei das
Querlagen-Gürtelpaket folgendes aufweist
mindestens zwei Schichten (5, 6), die Verbundstreifen (1) als Verstärkungselemente umfassen, **dadurch gekennzeichnet, dass** die Streifen aus uniaxialen Kohlenstofffasern (3) in einer Harzmatrix (2) bestehen und
die Kräuselungen der Streifen
in Längsrichtung in der xz-Ebene oder in Querrichtung in der xy-Ebene liegen,
wobei x die Längsachse des Verbundstreifens ist, y die Querachse des Verbundstreifens ist und z senkrecht zur xy-Ebene steht.

2. Pneumatischer Radialreifen umfassend eine Karkassenschicht und ein über der Karkassenschicht angeordnetes Kreuzlagen-Gürtelpaket mit geschnittenen Enden nach Anspruch 1, wobei der Volumengehalt der Kohlenstofffasern (3) in den Verbundstreifen (1) zwischen 40% und 70% liegt.

3. Pneumatischer Radialreifen umfassend eine Karkassenschicht und ein Kreuzlagen-Gürtelpaket mit geschnittenen Enden nach Anspruch 1, das über der Karkassenschicht angeordnet ist, wobei die Dicke der Verbundstreifen (1) größer als 0.5 mm und kleiner als 1.5 mm ist.

4. Pneumatischer Radialreifen umfassend eine Karkassenschicht und ein Kreuzlagen-Gürtelpaket mit geschnittenen Enden nach Anspruch 1, das über der Karkassenschicht angeordnet ist, wobei die Breite der Verbundstreifen (1) größer als 2.0 mm und kleiner als 10 mm ist.

5. Pneumatischer Radialreifen umfassend eine Karkassenschicht und ein Kreuzlagen-Gürtelpaket mit geschnittenen Enden nach Anspruch 1, das über der Karkassenschicht angeordnet ist, wobei die Breite der Verbundstreifen (1) größer als 3.0 mm und kleiner als 6.0 mm ist.

6. Pneumatischer Radialreifen umfassend eine Karkassenlage und ein über der Karkassenlage angeordnetes Kreuzlagen-Gürtelpaket mit geschnittenen Enden nach Anspruch 1, wobei die Breite der ersten Gürtellage L1 (5) des Kreuzlagen-Gürtelpaketes gleich der Breite der zweiten Gürtellage L2 (6) ist.

7. Pneumatischer Radialreifen umfassend eine Karkassenlage und ein über der Karkassenlage angeordnetes Kreuzlagen-Gürtelpaket mit geschnittenen Enden nach Anspruch 1, wobei die Breite der ersten Gürtellage L1 (5) des Kreuzlagen-Gürtelpaketes größer ist als die Breite der zweiten Gürtellage L2 (6) ist.

8. Pneumatischer Radialreifen umfassend eine Karkassenschicht und ein über der Karkassenschicht angeordnetes Kreuzlagen-Gürtelpaket mit geschnittenen Enden nach Anspruch 1, wobei die Kräuselungsfrequenz der Verbundstreifen (1) mindestens 20 Kräuselungen/Meter und maximal 60 Kräuselungen/Meter beträgt.

9. Pneumatischer Radialreifen umfassend eine Karkassenschicht und ein über der Karkassenschicht angeordnes Kreuzlagengürtelpaket mit geschnittenen Enden nach Anspruch 1, wobei die Kräuselhöhe der Verbundstreifen (1) mindestens 0.3 mm und maximal 1.0 mm beträgt.

10. Pneumatischer Radialreifen umfassend eine Karkassenschicht und ein über der Karkassenschicht angeordnetes Kreuzlagen-Gürtelpaket mit geschnittenen Enden nach Anspruch 1, wobei der Gürtelwinkel der Verbundstreifen (1) zur Äquatorialebene 15 bis 25° beträgt und die geschnittenen Enden einen Schnittwinkel von 90° aufweisen.

11. Pneumatischer Radialreifen umfassend eine Karkassenschicht und ein über der Karkassenschicht angeordnetes Kreuzlagen-Gürtelpaket mit geschnittenen Enden nach Anspruch 1, wobei der Gürtelwinkel der Verbundstreifen (1) zur Äquatorialebene 15 bis 25° beträgt und die geschnittenen Enden den gleichen Winkel wie der Gürtelwinkel aufweisen.

12. Pneumatischer Radialreifen, umfassend eine Karkassenschicht und ein Kreuzlagen-Gürtelpaket mit geschnittenen Enden nach Anspruch 1, das über der Karkassenschicht angeordnet ist, wobei die Schmelzpunkttemperatur der Harze (2) in den Verbundstreifen (1) minimal 200°C und maximal 300°C beträgt.

13. Pneumatischer Radialreifen, umfassend eine Karkassenschicht und ein Kreuzlagen-Gürtelpaket mit geschnittenen Enden, das über der Karkassenschicht nach Anspruch 1 angeordnet ist, wobei das Harz (2) in den Verbundstreifen (2) ein thermoplastisches Harz ist.

14. Pneumatischer Radialreifen, umfassend eine Karkassenschicht und ein Kreuzlagen-Gürtelpaket mit geschnittenen Enden, das über der Karkassenschicht nach Anspruch 1 angeordnet ist, wobei das Harz (2) in den Verbundstreifen (2) Nylon 6,6 ist.

## Revendications

1. Pneumatique radial comprenant une couche de carcasse et un paquet de ceinture à plis croisés avec des extrémités coupées qui est disposé sur ladite couche de carcasse, ledit paquet de ceinture à plis croisés ayant au moins deux couches (5, 6), comprenant des bandes composites (1) comme les éléments de renforcement qui est **caractérisé en ce que**, lesdites bandes sont constituées de fibres de carbone uniaxiales (3) dans une matrice de résine (2) et les frisures desdites bandes sont dans la direction longitudinale dans le plan xz ou dans la direction latérale dans le plan xy, dans lequel x est l'axe longitudinal de la bande composite, y est l'axe latéral de la bande composite et z est perpendiculaire au plan xy.

2. Pneumatique radial comprenant une couche de carcasse et un paquet de ceinture à plis croisés avec des extrémités coupées qui est disposé sur ladite couche de carcasse selon la revendication 1, la teneur en volume desdites fibres de carbone (3) dans lesdites bandes composites (1) est comprise entre 40 % et 70 %.

3. Pneumatique radial comprenant une couche de carcasse et un paquet de ceinture à plis croisés avec des extrémités coupées qui est disposé sur ladite couche de carcasse selon la revendication 1, l'épaisseur desdites bandes composites (1) est supérieure à 0.5 mm et inférieure à 1.5 mm.

4. Pneumatique radial comprenant une couche de carcasse et un paquet de ceinture à plis croisés avec des extrémités coupées qui est disposé sur ladite couche de carcasse selon la revendication 1, la largeur desdites bandes composites (1) est supérieure à 2.0 mm et inférieure à 10 mm.

5. Pneumatique radial comprenant une couche de carcasse et un paquet de ceinture à plis croisés avec des extrémités coupées qui est disposé sur ladite couche de carcasse selon la revendication 1, la largeur desdites bandes composites (1) est supérieure à 3.0 mm et inférieure à 6.0 mm.

6. Pneumatique radial comprenant une couche de carcasse et un paquet de ceinture à plis croisés avec des extrémités coupées qui est disposé sur ladite couche de carcasse selon la revendication 1, la largeur de la première couche de ceinture L1 (5) du paquet de ceinture à plis croisés est égale à la largeur de la deuxième couche de ceinture L2 (6).

7. Pneumatique radial comprenant une couche de carcasse et un paquet de ceinture à plis croisés avec des extrémités coupées qui est disposé sur ladite couche de carcasse selon la revendication 1, la largeur de la première couche de ceinture L1 (5) du paquet de ceinture à plis croisés est supérieure à la largeur de la deuxième couche de ceinture L2 (6).

8. Pneumatique radial comprenant une couche de carcasse et un paquet de ceinture à plis croisés avec des extrémités coupées qui est disposé sur ladite couche de carcasse selon la revendication 1, la fréquence de frisage desdites bandes composites (1) est d'au moins 20 frisures/mètre et de 60 frisures/mètre au maximum.

9. Pneumatique radial comprenant une couche de carcasse et un paquet de ceinture à plis croisés avec des extrémités coupées qui est disposé sur ladite couche de carcasse selon la revendication 1, la hauteur de sertissage desdites bandes composites (1) est de 0.3 mm au minimum et de 1.0 mm au maximum.

10. Pneumatique radial comprenant une couche de carcasse et un paquet de ceinture à plis croisés avec des extrémités coupées qui est disposé sur ladite couche de carcasse selon la revendication 1, l'angle de ceinture desdites bandes composites (1) par rapport au plan équatorial est de 15 à 25° avec des extrémités coupées à 90° d'angle de coupe.

11. Pneumatique radial comprenant une couche de carcasse et un paquet de ceinture à plis croisés avec des extrémités coupées qui est disposé sur ladite couche de carcasse selon la revendication 1, l'angle de ceinture desdites bandes composites (1) par rapport au plan équatorial est de 15 à 25° avec des extrémités coupées avec le même angle que l'angle de la ceinture.

12. Pneumatique radial comprenant une couche de carcasse et un paquet de ceinture à plis croisés avec des extrémités coupées qui est disposé sur ladite couche de carcasse selon la revendication 1, la température du point de fusion desdites résines (2) dans lesdites bandes composites (1) est de 200 °C au minimum et de 300 °C au maximum.

13. Pneumatique radial comprenant une couche de carcasse et un paquet de ceinture à plis croisés avec des extrémités coupées qui est disposé sur ladite couche de carcasse selon la revendication 1, ladite résine (2) dans lesdites bandes composites (2) est une résine thermoplastique.

14. Pneumatique radial comprenant une couche de carcasse et un paquet de ceinture à plis croisés avec des extrémités coupées qui est disposé sur ladite couche de carcasse selon la revendication 1, ladite résine (2) dans lesdites bandes composites (2) est du nylon 6,6.
